# EUROPEAN PATENT APPLICATION

(11) **EP 4 560 615 A1**
(43) Date of publication of application: **28.05.2025**
(21) Application number: 23891813.0
(22) Date of filing: 27.09.2023
(51) Int. Cl.: G09G 3/32, G09G 3/14, G09G 3/20, G06N 3/04, G06N 3/08

(54) **DISPLAY DEVICE AND METHOD FOR DRIVING SAME**

(30) Priority: 18.11.2022 KR 20220155283
(71) Applicant: Samsung Electronics Co., Ltd., Suwon-si, Gyeonggi-do 16677 (KR)
(72) Inventor: LEE, Joohyun, Suwon-si Gyeonggi-do 16677 (KR)
(74) Representative: Appleyard Lees IP LLP
(86) International application number: PCT/KR2023/015114
(87) International publication number: WO 2024/106744

(57) **Abstract**

A display device is disclosed. The display device includes a display divided into a plurality of display areas, a drive part including a plurality of drive modules connected to each of the plurality of display areas, a memory that stores current information corresponding to each of the plurality of display areas, and one or more processors that are connected to the display, the drive part, and the memory to control the display device. When an image is inputted into a trained artificial intelligence model and is identified as a target for applying dynamic peaking where the pixel value of the image is less than or equal to a threshold, the one or more processors identify a peak luminance level of each of the plurality of display areas, and control the plurality of drive modules to cause each of the plurality of display areas to have the identified peak luminance level based on the current information of the plurality of display areas stored in the memory.

## Description

### [TECHNICAL FIELD]

The present disclosure relates to a display device and a method for driving the same and more particularly, to a display device including a light emitting diode and a method for driving the same.

### [BACKGROUND ART]

The light emitting diode (LED) is a semiconductor light emitting element which converts currents to light. Recently, as luminance of the light emitting diode gradually increases, use of a light source for a display, a light source for a vehicle, and a light source for lighting increases, wherein a light emitting diode which emits white light of which efficiency is excellent may be also implemented by using a fluorescent material or combining light emitting diodes of various colors. This light emitting diode may display an image at high luminance as currents increase.

### [DISCLOSURE]

### [TECHNICAL SOLUTION]

According to an embodiment, a display device includes a display divided into a plurality of display areas, a driving part including a plurality of driving modules connected to the plurality of display areas, memory where current information corresponding to each of the plurality of display areas is stored, and one or more processors connected to the display, the driving part, and the memory to control the display device. The one or more processors are configured to, based on an image being inputted to a trained Artificial Intelligence (AI) model and the image being identified as a target for dynamic peaking application in which the pixel value of the image is equal to or less than a threshold value, identify a peak luminance level of each of the plurality of display areas, and control the plurality of driving modules such that each of the plurality of display areas has the identified peak luminance level based on the current information of the plurality of display areas stored in the memory.

According to an embodiment, each of the plurality of display areas may be at least one of a pixel area unit corresponding to one driver IC or a module unit corresponding to a plurality of driver ICs.

According to an embodiment, the trained AI model may be trained to identify whether the input image is the target for the dynamic peaking application based on a training image to which the dynamic peaking is applied and a training image to which the dynamic peaking is not applied. The one or more processors, based on the image being identified by the trained AI model as the target for the dynamic peaking application, identify whether a pixel value of the image is equal to or less than the threshold value, and based on the pixel value of the image being equal to or less than the threshold value, may control the plurality of driving modules to calculate a peak luminance level of each of the plurality of display areas and apply local dynamic peaking. The local dynamic peaking may control the plurality of driving modules such that each of the plurality of display areas has an individual peak luminance level.

According to an embodiment, the trained AI model may be trained to identify whether the input image is a target for local dynamic peaking application based on a training image to which the dynamic peaking is applied and of which a pixel value is equal to or less than the threshold value and a training image to which the dynamic peaking is not applied. The one or more processors, based on the image being identified by the trained AI model as the target for the local dynamic peaking application, may control the plurality of driving modules to calculate a peak luminance level of each of the plurality of display areas and apply the local dynamic peaking.

According to an embodiment, the one or more processors, based on a pixel value of a first display area among the plurality of display areas and a plurality of second display areas adjacent to the first display area being equal to or less than a first threshold value, and a difference between the first display area and each of the plurality of second display areas being equal to or less than a second threshold value, may control a first driving module corresponding to the first display area and second driving modules corresponding to each of the plurality of second display areas such that the first display area and the plurality of second display areas have a corresponding peak luminance level.

According to an embodiment, the one or more processors may correct at least one of brightness or a color with respect to a second image area or a third image area based on at least one of a brightness difference or a color difference between the second image area corresponding to the plurality of second display areas and the third image area corresponding to a plurality of third display areas adjacent to the plurality of second display areas.

According to an embodiment, the one or more processors may obtain a current gain value per subpixel corresponding to the first display area from the memory such that the first display area and the plurality of second display areas have a corresponding peak luminance level and control the first driving module and the plurality of second driving modules based on the obtained current gain value.

According to an embodiment, the memory may further store power information of each subpixel per gradation of the image. The one or more processors may identify an amount of individual consumption power of each of the plurality of display areas based on a gradation value of an image displayed on the plurality of display areas and power information of each subpixel per gradation, and identify a peak luminance level of each of the plurality of display areas based on the amount of individual consumption power of each of the plurality of display areas.

According to an embodiment, the current information may include current control information according to luminance per subpixel corresponding to each of the plurality of display areas, wherein the subpixel may include Red (R) LED, Green (G) LED, and Blue (B) LED subpixels.

According to an embodiment, a method of driving a display device divided into a plurality of display areas includes inputting an image into a trained AI model and based on the image being identified as a target for dynamic peaking application in which the pixel value of the image is equal to or less than a threshold value, identifying a peak luminance level of each of the plurality of display areas, and controlling a plurality of driving modules corresponding to the plurality of display areas such that each of the plurality of display areas has the identified peak luminance level based on current information of the plurality of display areas.

According to an embodiment, a non-transitory computer readable medium storing computer instructions that, when executed by a processor of a display device divided into a plurality of display areas, causes the display device to input an image into a trained AI model and based on the image being identified as a target for dynamic peaking application in which the pixel value of the image is equal to or less than a threshold value, identify a peak luminance level of each of the plurality of display areas, and control a plurality of driving modules corresponding to the plurality of display areas such that each of the plurality of display areas has the identified peak luminance level based on current information of the plurality of display areas.

### [DESCRIPTION OF DRAWINGS]

FIGS. 1A and 1B are views schematically illustrating an operation of a display device according to an embodiment;
FIG. 2A is a block diagram illustrating a configuration of a display device according to an embodiment;
FIG. 2B is a block diagram illustrating a configuration of a display device according to an embodiment;
FIG. 3A is a view illustrating current gain information per luminance of each subpixel according to an embodiment;
FIG. 3B is a view illustrating power information of each subpixel per gradation of an image according to an embodiment;
FIGS. 4, 5A, and 5B are views illustrating a method of driving a display device according to an embodiment;
FIGS. 6A and 6B are views illustrating a method of driving a display device according to an embodiment;
FIGS. 7A and 7B are views illustrating a method of driving a display device according to an embodiment;
FIGS. 8 and 9 are views illustrating a method of driving a display according to an embodiment;
FIG. 10 is a view illustrating a luminance characteristic of R/G/B LED elements in accordance with current increase according to an embodiment;
FIGS. 11A to 11C are views illustrating a color shift characteristic of R/G/B LED elements in accordance with current increase according to an embodiment; and
FIG. 12 is a view illustrating a method of driving a display according to an embodiment.

### DETAILED DESCRIPTION

The terms used are described and then one or more embodiments are described.

The terms used in the disclosure are selected as terms which are currently widely used in consideration of functions in the disclosure. It may be varied depending on an intention of those skilled in the art or a precedent, appearance of new technologies, or the like. may be terms which are arbitrarily selected in certain cases and their meanings may be described in the relevant descriptions. The terms used in the disclosure should be defined based on the meaning of the terms and the entire context throughout the disclosure rather than the simple name of the term.

The term "first", "second", or the like may be used to describe various components, but the components should not be limited by the term. The term is used only for the purpose of distinguishing one component from another component.

A singular expression includes a plural expression, unless obviously differently defined in the context. In the application, the term such as "include" or "consist of" should be construed as designating that there are such characteristics, numbers, steps, operations, elements, parts, or a combination thereof, but not as excluding in advance the existence or possibility of adding one or more other characteristics, numbers, steps, operations, elements, parts, or a combination thereof.

The expression "at least one of A or B" should be interpreted to mean any one of "A" or "B" or "A and B."

In the disclosure, "module" or "part" may perform at least one function or operation and may be implemented as hardware or software, or as a combination of hardware and software. In addition, a plurality of "modules" or "parts" may be integrated into at least one module and implemented as one or more processors (not shown) excluding a "module" or "part" that needs to be implemented as specific hardware.

Hereinafter, with reference to the appended drawings, an embodiment according to the disclosure is described to be easily embodied by those skilled in the art. However, the disclosure may be implemented in various different forms and is not limited to embodiments described herein. Further, a part which is not related to the description is omitted from the drawings to clearly describe the disclosure, and a similar part is designated with a similar reference numeral throughout the specification.

Embodiments are described with reference to the appended drawings.

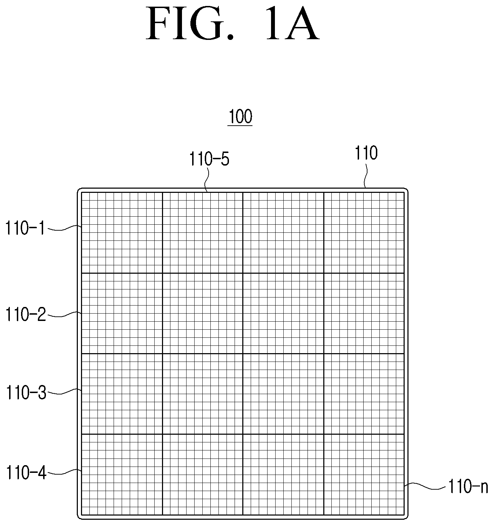

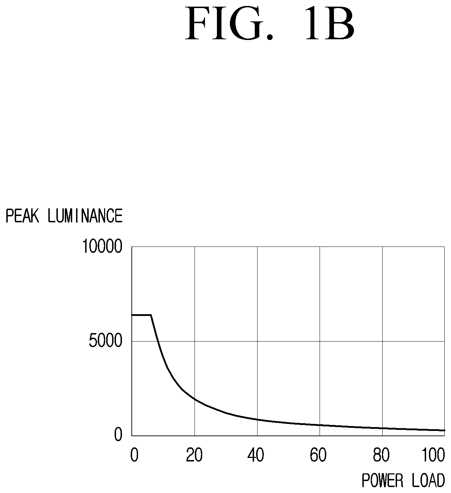

FIGS. 1A and 1B are views schematically illustrating an operation of a display device according to an embodiment.

According to an embodiment, the display device 100 may be implemented in a form of physically connecting a plurality of display modules 110-1, 110-2, 110-3, 110-4.... as shown in FIG. 1A. Here, each of a plurality of display modules may include multiple pixels arranged in a matrix form, for example, spontaneous light emitting pixels. The display module may be implemented as a LED module in which each of multiple pixels is implemented as a LED pixel or a LED cabinet in which a plurality of LED modules are connected, but the disclosure is not limited thereto. For example, the display device 100 may be implemented as a micro LED, a Mini LED, an Organic Light Emitting Diode (OLED) display, a Plasma Display Panel (PDP), a Quantum dot (QD) display, a Quantum dot light-emitting diode (QLED), etc. For convenience of the description, the description is made under the assumption that each display module is implemented as the LED cabinet hereinafter.

The LED may display an image at high luminance as applied currents increase, and upon using a display consisting of LED cabinets, peak luminance of each LED cabinet is determined based on capacity of rated power capable of being provided from each LED cabinet. According to an embodiment, a peak gain value determined based on current gain modeling of the LED cabinet consuming maximum power may be applied to an entire set. Here, the current gain modeling is driven at maximum peak luminance which does not exceed rated capacity of a power supply (e.g. a switched mode power supply (SMPS)) in case of Full White in a LED cabinet unit. Accordingly, if the LED cabinet is Full Black, a power load of the SMPS may be measured by controlling a size of a White Patch image. For example, a graph shown in FIG. 1B may be a graph corresponding to a cabinet model having peak luminance up to a power load in which the White Patch image is output up to about 10% of a cabinet size upon applying dynamic peaking. As shown in FIG. 1B, the peak luminance gradually decreases as the power load increases due to increase of the size of the White Patch image.

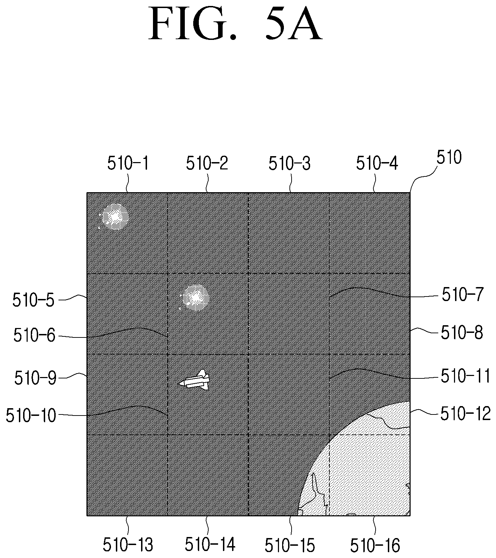

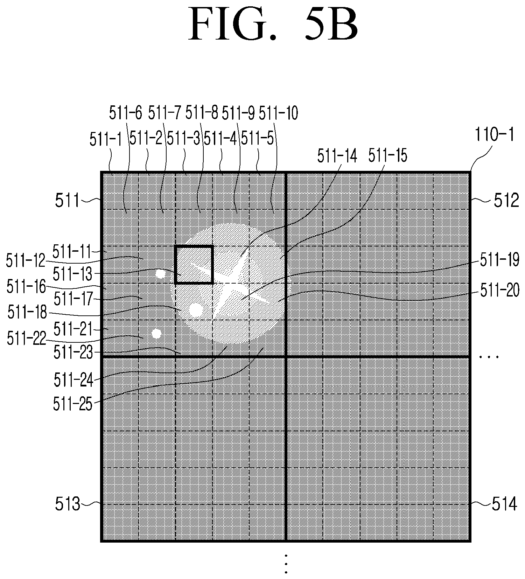

When a peak gain value determined based on current gain modeling of the LED cabinet consuming maximum power is applied to an entire set, if there is even one cabinet unit pattern of which R/G/B luminance levels are relatively high (e.g., close to White) in the input image, a low peak gain may be applied to an entire image. For example, in an image shown in FIG. 5, since R/G/B luminance levels of a cabinet transmitting an Earth part are high, a cabinet outputting a spacecraft or a star has no choice to apply a low peak gain even though much capacity of SMPS power remains.

Accordingly, various embodiments to maximize a contrast effect per part in the image by individually calculating a peak gain in a unit of a module or a display area smaller than the cabinet are described hereinafter.

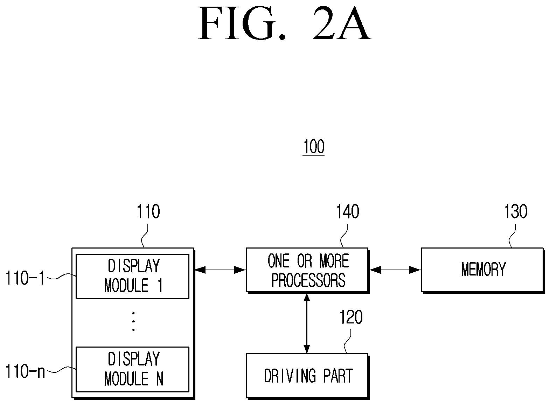

FIG. 2A is a block diagram illustrating a configuration of a display device according to an embodiment.

According to FIG. 2A, the display device 100 includes a display 110, a driving part 120, memory 130, and one or more processors 140.

The display 110 may include a plurality of display modules. The display 110 may be configured in a form in which a plurality of display modules 110-1,...110-n are connected and assembled. Here, each of a plurality of display modules may include multiple pixels arranged in a matrix form, for example, spontaneous light emitting pixels. According to an embodiment, the display 110 may be implemented as a plurality of LED modules (LED modules including at least one LED element) and/or a plurality of LED cabinets. The LED module may include a plurality of LED pixels, wherein according to an embodiment, the LED pixels may be implemented as RGB LEDs, and the RGB LED may include a RED LED, a GREEN LED, and a BLUE LED together.

The driving part 120 drives the display 110 under control of the one or more processors 140. For example, the driving part 120 drives each LED pixel by applying a driving voltage or making a driving current flow to drive each spontaneous light emitting element, for example, a LED pixel constituting the display panel 110 under control of the processor 140.

The driving part 120 may include a plurality of drivers connected to the plurality of display modules 110-1,...110-n. For example, one display module 110-1 (e.g. a cabinet or a module) is divided into a plurality of display areas, and a plurality of drivers are connected to each of the plurality of display areas. The plurality of drivers may supply a driving current to each of a plurality of display areas to correspond to each control signal input from the processor 140. The plurality of drivers may adjust and output at least one of a supply time or an intensity of the driving current supplied to the plurality of display areas to correspond to each control signal input from the processor 140.

According to an embodiment, each of the plurality of display modules 110-1,...110-n may include a power supply for supplying power. The power supply is hardware converting an alternating current (AC) to a direct current (DC) to use currents stably in each of the plurality of display modules 110-1,...110-n and supplying power suited to each system. The power supply may be largely configured of an input electro magnetic interference (EMI) filter part, an AC-DC rectifying part, a DC-DC switching conversion part, an output filter, and an output part. The power supply may be implemented as, for example, a SMPS. The SMPS is a DC stabilizing power device which controls an on-off time ratio of a semiconductor switch element to stabilize an output and may be used for driving each of the plurality of display modules 110-1,...110-n. According to another embodiment, the driving part 120 may be implemented in a form of one driver separately driving a plurality of SMPSs supplying power to each of the plurality of display modules 110-1,...110-n.

The memory 130 may store data for various embodiments. The memory 130 may be implemented as memory embedded in the display device 100 according to use for data storage or may be implemented as memory detachable from the electronic device 100. For example, data for driving the display device 100 is stored in memory embedded in the display device 100', and data for an extension function of the display device 100 may be stored in memory detachable from the display device 100. The memory embedded in the electronic device 100' may be implemented as at least one of volatile memory (e.g. dynamic RAM (DRAM), static RAM (SRAM), synchronous dynamic RAM (SDRAM), etc.) or non-volatile memory (e.g. one time programmable ROM (OTPROM), programmable ROM (PROM), erasable and programmable ROM (EPROM), electrically erasable and programmable ROM (EEPROM), mask ROM, flash ROM, flash memory (e.g. NAND flash memory, NOR flash memory, etc.), a hard drive, or a solid state drive(SSD)). The memory detachable from the electronic device 100' may be implemented as a memory card (e.g. a Compact Flash (CF) card, a Secure Digital (SD) card, a Micro Secure Digital (Micro-SD) card, a Mini Secure Digital (Mini-SD) card, an extreme Digital (xD) card, a Multi-Media Card (MMC), etc.), external memory connectable to a USB port (e.g. USB memory), etc.

According to an embodiment, the memory 130 may store current information about the plurality of display modules 110-1,.., 110-n. Here, the current information may be current control information according to luminance per each subpixel constituting the display module. Here, the current control information according to luminance per each subpixel may be current control information according to luminance per calibrated (modeled) subpixel based on a luminance characteristic and a color shift characteristic according to currents of each subpixel.

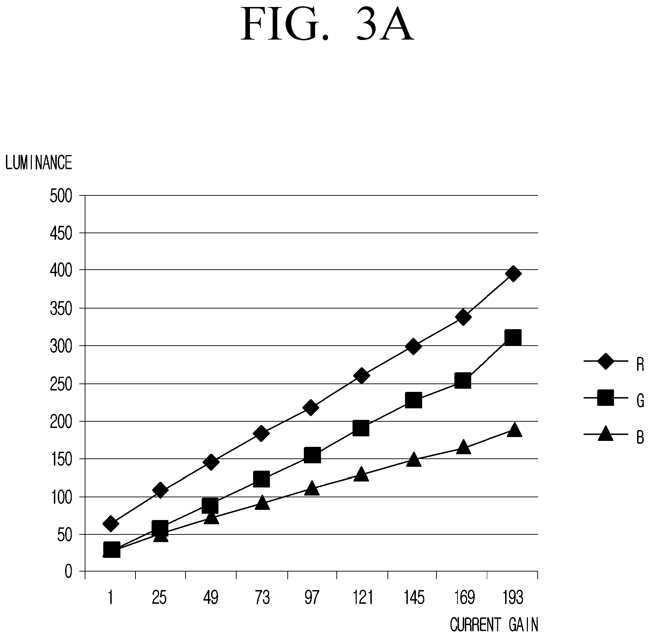

The current control information according to luminance per subpixel may be current gain information per luminance of each subpixel calibrated based on luminance level information according to currents of each subpixel and color shift information according to currents of each subpixel. For example, the luminance level information according to currents per each subpixel may be luminance change information according to a change in currents per R/B/G LED element, and the color information according to currents per subpixel may be a degree of a color coordinate (e.g. x, y color coordinates) change according to a change in currents per R/B/G LED element. The current gain information according to luminance per subpixel may be a current gain value per luminance of each subpixel obtained by calibrating a current value such that a phenomenon of color shift per R/B/G LED element according to a current change does not occur while calibrating the current value such that an amount of variation in luminance per R/B/G LED element according to a current change is similar. For example, as shown in FIG. 3A, the current gain information per luminance of each subpixel may include a current gain value per luminance of each subpixel calibrated based on luminance and color characteristics of each subpixel according to current increase. The disclosure is not limited thereto, and the current control information may be a current value itself rather than the current gain value, for example.

The memory 130 may store luminance level information per power provided to the display module. As power provided to the display module increases, luminance of the display module also increases, but if the supply power exceeds a threshold value, an increase ratio of luminance of the display module is gradually reduced and does not increase to a maximum luminance value or more. Information about an amount of variation in luminance of the display module according to an amount of variation in supply power may be premeasured and stored in the memory 130. The luminance level information per power may be information about an amount of luminance increase according to an amount of power increase. Meanwhile, even though the information is not this type of information, any information indicating a relation between supply power and luminance may be applied without limitations.

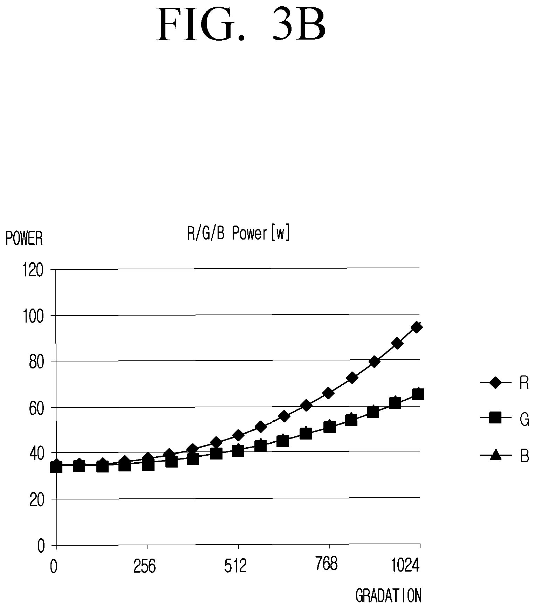

The memory 130 may store power information of each subpixel per gradation. Gradation of an image relates to a luminance value, and thus power per R/G/B LED element for representing an image of preset gradation is changed. The memory 130 may store the power information of each R/G/B LED element per gradation of the image. For example, the memory 130 may store power information of each R/G/B LED element per gradation of a 255 gradation value (in case that the image has gradation of 256 stages with respect to each color signal of RGB) or 1024 gradation (in case that the image has gradation of 1024 stages with respect to each color signal of RGB). This power information per gradation is premeasured and stored in the memory 130. Information about power per gradation may be obtained by measuring an amount of power consumed in the R/G/B LED elements in a state that an image per gradation is displayed on the display module, respectively. For example, as shown in FIG. 3B, if each R/G/B LED element represents each gradation value of 1024 gradation, an amount of consumed power may be different. When comparing the Red LED element to the Green LED element and the Blue LED element, the Red LED element may use relatively large power for representing the same gradation value, and the Green LED element and the Blue LED element may use the almost same power for representing the same gradation value.

The memory 130 may store information about a Binning group, information about maximum luminance per pixel, information about a color per pixel, a luminance correction coefficient per pixel, etc. Here, the Binning group may be a LED pixel group having the same characteristics (luminance, a color coordinate, etc.) in the case of the LED pixel.

For example, luminance is adjusted downward through calibration by utilizing a luminance correction coefficient to suit maximum luminance to target luminance for a uniformity characteristic among a plurality of LED pixels. The luminance correction coefficient may be in a 3*3 matrix form for implementing target R/G/B luminance, wherein the uniformity may be realized by applying different luminance correction coefficients to each pixel such that the maximum luminance is to be the target luminance. A color temperature may be also calibrated to have uniformity while the target luminance is implemented based on a parameter in the 3*3 matrix form corresponding to each of R/G/B elements.

The memory 130 may further store information about the number of pixels constituting each of the plurality of display modules, a size of the pixels, and an interval between the pixels.

According to one or more embodiments, the information stored in the memory 130 is not stored in the memory 130 and is obtained from an external device. For example, part of information may be received from the external device such as a set top box, an external server, or a user terminal in real time.

The one or more processors 140 control operations of the display device 100 overall. The one or more processors 140 may be connected to each component of the display device 100 to control operations of the display device 100 overall. For example, the one or more processors 140 may be electrically connected to the display 110 and the memory 130 to control the operations of the display device 100 overall. The processor 140 may be configured as one processor or a plurality of processors.

The one or more processors 140 may perform operations of the display device 100 according to various embodiments by executing at least one instruction stored in the memory 130.

The one or more processors 140 may include one or more of a Central Processing Unit (CPU), a Graphics Processing Unit (GPU), an Accelerated Processing Unit (APU), a Many Integrated Core (MIC), a Digital Signal Processor (DSP), a Neural Processing Unit (NPU), a hardware accelerator, or a machine learning accelerator. The one or more processors 140 may control one or any combination of other components of the display device and perform an operation related to communication or data processing. The one or more processors 140 may perform one or more programs or instructions stored in the memory. For example, the one or more processors may perform a method according to an embodiment by executing one or more instructions stored in the memory.

If a method according to an embodiment includes a plurality of operations, the plurality of operations may be performed by one processor and may be performed by a plurality of processors. For example, when a first operation, a second operation, and a third operation are performed by a method according to an embodiment, all of the first operation, the second operation, and the third operation may be performed by a first processor, the first operation and the second operation are performed by the first processor (e.g. a central processing unit (CPU)), and the third operation may be performed by a second processor (e.g. an Artificial Intelligence (AI)-dedicated processor).

The one or more processors 140 may be implemented as a single core processor including one core and may be implemented as one or more multi core processors including a plurality of cores (e.g. homogeneous multicores or heterogeneous multicores). If the one or more processors 140 are implemented as a multi core processor, each of the plurality of cores included in the multi core processor may include processor internal memory such as cache memory and on-chip memory, wherein a common cache shared by the plurality of cores may be included in the multi core processor. Each of the plurality of cores included in the multi core processor (or part of the plurality of cores) may read and perform program instructions for independently implementing a method according to an embodiment and may read and perform program instructions for implementing a method according to an embodiment in connection with all (or part) of the plurality of cores.

If a method according to an embodiment includes a plurality of operations, the plurality of operations may be performed by one core among the plurality of cores included in the multi core processor and may be performed by the plurality of cores. For example, when a first operation, a second operation, and a third operation are performed by a method according to an embodiment, all of the first operation, the second operation, and the third operation may be performed by a first core included in the multi core processor, the first operation and the second operation may be performed by the first core included in the multi core processor, and the third operation may be performed by the second core included in the multi core processor.

In embodiments, a processor may mean a System on Chip (SoC) onto which one or more processors and other electronic components are integrated, a single core processor, a multi core processor, or a core included in the single core processor or the multi core processor, wherein the core may be implemented as a CPU, a GPU, an APU, a MIC, a DSP, a NPU, a hardware accelerator, a machine learning accelerator, or the like, but embodiments are not limited thereto.

The GPU is a processor for a mass operation such as a floating point operation used for graphic processing and may integrate cores massively to perform a mass operation in parallel. The GPU may be favorable for a parallel processing method such as a convolution operation compared to the CPU. The GPU may be used for a co-processor for supplementing a function of the CPU. The processor for the mass operation is not limited to the aforementioned examples, excluding a case that the disclosure designates it as the GPU.

The NPU is a processor relating to an AI operation using an artificial neural network, wherein each layer configuring the artificial neural network may be implemented as hardware (e.g. silicon). Here, the NPU is designed according to manufacturer specification, and thus its degree of freedom is lower than that of the CPU or the GPU but may efficiently perform the AI operation indicated by the manufacturer. As a processor relating to the AI operation, the NPU may be implemented as various forms such as a Tensor Processing Unit (TPU), an Intelligence Processing Unit (IPU), or a Vision processing unit (VPU). The AI processor is not limited to the aforementioned examples, excluding a case that the disclosure designates it as the NPU.

One or more processors may be implemented as a System on Chip (SoC). Here, the SoC may further include memory and a network interface such as a bus for data communication between the processor and the memory besides one or more processors. If the SoC included in the display device 100 includes a plurality of processors, the display device 100 may perform an operation related to AI (e.g. an operation related to learning or inference of the AI model) by using a partial processor of the plurality of processors. For example, the display device 100 may perform an operation related to the AI by using at least one of a GPU, a NPU, a VPU, a TPU, or a hardware accelerator relating to the AI operation such as a convolution operation or a matrix product calculation among the plurality of processors. Meanwhile, this is merely an example, and it is obvious that the operation related to the AI may be processed by using a processor such as a CPU.

The display device 100 may perform an operation with respect to a function related to AI by using a multicore (e.g. a dual core, a quad core) included in one processor. The display device 100 may perform the AI operation such as the convolution operation and the matrix product calculation in parallel by using the multicore included in the processor.

For convenience of the description, the one or processors 140 are referred to as a processor 140.

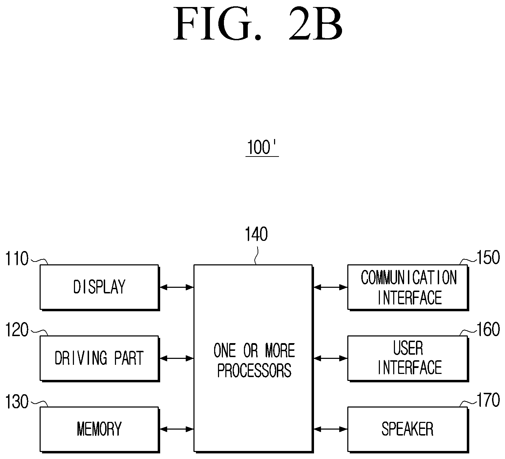

FIG. 2B is a block diagram illustrating a configuration of a display device according to an embodiment.

According to FIG. 2B, the display device 100' may include a display 110, a driving part 120, memory 130, one more processors 140, a communication interface 150, a user interface 160, and a speaker 170. The detailed description of components overlapped with the components shown in FIG. 2A among the components shown in FIG. 2B is omitted.

It is obvious that the communication interface 150 may be implemented as various interfaces according to an embodiment of the display device 100'. For example, the communication interface 150 may receive an input image in a streaming or download method from an external device, an external storing medium (e.g. USB memory), an external server (e.g. webhard), or the like through a communication method such as Bluetooth, AP-based Wi-Fi (Wi-Fi, a Wireless LAN network), Zigbee, a wired/wireless local area network (LAN), a wide area network (WAN), Ethernet, IEEE 1394, a High-Definition Multimedia Interface (HDMI), a universal serial bus (USB), a mobile high-definition link (MHL), Audio Engineering Society/European Broadcasting Union (AES/EBU), an optical method, or a coaxial method. Here, the input image may be any one digital image of a Standard Definition (SD) image, a High Definition (HD) image, a full HD image, or an ultra HD image but is not limited thereto.

The user interface 160 may be implemented as a device such as a button, a touch pad, a mouse, and a keyboard or may be implemented as a touch screen, or the like capable of performing the display function and also a manipulation input function together.

The speaker 170 is a component outputting not only various audio data but also various alarm sound, voice messages, or the like. The processor 140 may control the speaker 170 to output feedback or various alarms in an audio form according to various examples.

The display device 100' may include a camera (not shown), a microphone (not shown), a tuner (not shown), and a demodulation part (not shown), etc.

The camera (not shown) may be turned on according to a preset event and perform capturing. The camera (not shown) may be used for recognizing a gesture command of a user or obtaining surrounding context information.

The microphone (not shown) is a component for receiving and converting a user voice or other sound to audio data. According to another example, the display device 100' may receive user sound input through an external device through the communication interface 150.

The tuner (not shown) may tune a channel selected by the user among radio frequency (RF) broadcasting signals received through an antenna or all prestored channels to receive the RF broadcasting signals.

The demodulator (not shown) may receive and demodulate a Digital IF (DIF) signal converted in the tuner and may perform channel decoding or the like.

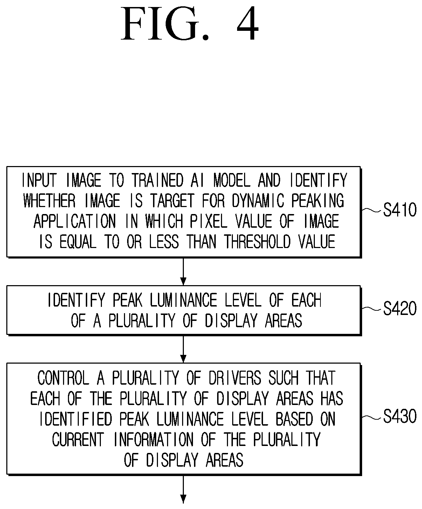

FIG. 4 is a view illustrating a method of driving a display device according to an embodiment.

According to an embodiment shown in FIG. 4, the processor 140 may input the image to the trained AI model and identify whether the image is a target for dynamic peaking application in which a pixel value of the image is equal to or less than a threshold value (S410). For example, the electronic device 100 may receive various compression images and/or various resolution images. For example, an image processing device 100 may receive an image in a compressed form such as Moving Picture Experts Group (MPEG) (e.g. MP2, MP4, MP7, etc.), Joint Photographic Experts Group (JPEG), Advanced Video Coding (AVC), H.264, H.265, or High Efficiency Video Codec (HEVC). The electronic device 100 may receive any one image of Standard Definition (SD), High Definition (HD), Full HD, or Ultra HD images.

The processor 140, if the image is determined as the target for dynamic peaking application in which the pixel value of the image is equal to or less than the threshold value, may identify a peak luminance level of each of the plurality of display areas (S420). Here, a plurality of display areas may be at least one of a pixel area unit corresponding to one driver integrated chip (IC) or a display module unit corresponding to a plurality of driver ICs. Depending on a case, a plurality of display areas may be a pixel area unit smaller than a pixel area unit corresponding to one driver IC. Here, the driver IC may perform a function of receiving a signal about which screen is to be driven from the processor 140, and then generate and control an output signal for operating a display panel, and may transmit a control signal to each pixel of the display panel. For example, the driver IC may be configured of a Gate IC, a Source IC, etc.

The processor 140 may control a plurality of drivers such that each of the plurality of display areas has the identified peak luminance level based on current information of the plurality of display areas stored in the memory 130. The processor 140 may control a plurality of drivers (e.g. a driver IC) such that each of the plurality of display areas has an individual peak luminance level. The technology driving such that each of the plurality of display areas has an individual peak luminance level is referred to as local dynamic peaking.

According to an embodiment, the processor 140 may calculate a peak luminance level of each of the plurality of display areas based on an amount of individual consumption power calculated with respect to each of the plurality of display areas. The processor 140 may control each of a plurality of drivers such that each of the plurality of display areas has a corresponding peak luminance level based on current information per luminance stored in the memory 130.

The processor 140 may calculate an amount of power consumed in each of the plurality of display areas based on a gradation value of the image displayed on each of the plurality of display areas and power information of each subpixel per gradation obtained from the memory 130.

For example, it is assumed that a plurality of display modules 110-1,...110-n are implemented as 16 cabinets. As shown in FIG. 5A, a plurality of division areas included in an entire image 510, for example, first to sixteenth division areas 510-1, 510-2, ...510-16 may be provided to each cabinet 110-1,...110-n. As shown in FIG. 5B, one cabinet 110-1 may include a plurality of modules 511, 512, 513, 514, and the first division area 510-1 among the plurality of division areas in the entire image 510 is divided and provided into/to a plurality of modules 511, 512, 513, 514. One module 511 among the plurality of modules may be divided into a plurality of display areas 511-1 to 511-20. For example, the plurality of display areas 511-1 to 511-20 may be a pixel area unit corresponding to one driver IC.

According to an embodiment, the processor 140 may calculate an amount of power consumed in each display area 511-1 to 511-20 based on the image gradation value to be represented by each subpixel, for example, each R/G/B with respect to each of the plurality of display areas 511-1 to 511-20. The processor 140 may calculate an amount of power consumed in each display area 511-1 to 511-20 based on power information of each R/G/B LED element per gradation stored in the memory 130. This power value for gradation expression of the image per R/G/B LED element is prestored in the memory 130, and the processor 140 may calculate an amount of individual consumption power of each display area 511-1 to 511-20 based on the prestored information.

The processor 140 may calculate a peak luminance level of each of the plurality of display areas 511-1 to 511-20 based on an amount of individual consumption power of each of the plurality of display areas 511-1 to 511-20 and capacity of power which may be provided by the plurality of drivers. Here, the capacity which may be provided by the plurality of drivers may be determined based on rated capacity (or a rated output) of a SMPS included in each cabinet 110-1, ..., 110-n. For example, the capacity which may be provided by the plurality of drivers corresponding to each display area 511-1 to 511-20 may be determined based on rated capacity of the SMPS included in a first cabinet 110-1.

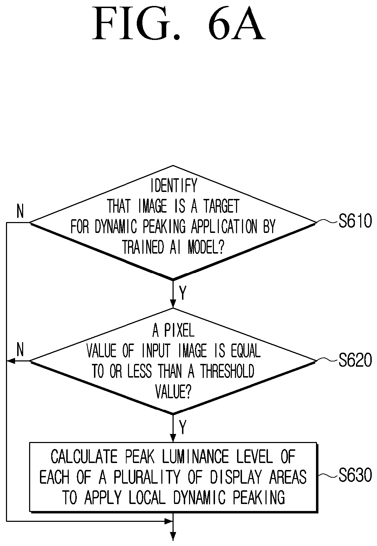

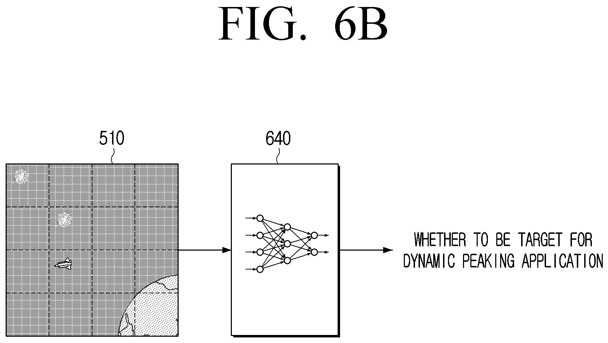

FIGS. 6A and 6B are views illustrating a method of driving a display device according to an embodiment.

According to an embodiment, the trained AI model may be constructed through learning to identify whether the input image is the target for the dynamic peaking application based on a training image to which the dynamic peaking is applied and a training image to which the dynamic peaking is not applied. The training image to which the dynamic peaking is applied may be an image viewed by a user in a state that the user turns on a dynamic peaking function. The training image to which the dynamic peaking is not applied may be an image viewed by the user in a state that the user turns off the dynamic peaking function.

Here, the construction through learning means that the AI model having a desired characteristic is constructed by applying a learning algorithm to a plurality of learning data. This learning may be performed in a device itself where the AI according to the disclosure is performed and also may be performed through a separate server/system. The AI model may be composed of a plurality of neural network layers. At least one layer has at least one weight value and performs an operation of the layer through an operation result of the previous layer and at least one defined operation. An example of the neural network is a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep Q-Network, and a Transformer, wherein the neural network is not limited to the aforementioned example, excluding a case that the neural network is designated in the disclosure.

The learning algorithm is a method in which a given target device is trained by using a plurality of learning data such that the given target device may make or predict a decision by itself. Examples of the learning algorithm are supervised learning, unsupervised learning, semi-supervised learning, or reinforcement learning, wherein the learning algorithm is not limited to the aforementioned examples, excluding a case that the learning algorithm is designated in the disclosure. For example, the AI model may be trained by using the training image and identification information about whether to be a target for corresponding dynamic peaking application as a training data pair or be trained by using the training image and whether to be a target for corresponding dynamic peaking application as input data.

According to FIG. 6A, the processor 140 may identify whether the input image is a target for dynamic peaking application by the trained AI model (S610).

The processor 140, if identifying whether the image is a target for dynamic peaking application (S610:Y), may identify whether a pixel value of the image is equal to or less than a threshold value (S620).

The processor 140, if identifying that the pixel value of the image is equal to or less than the threshold value (S620:Y), may calculate a peak luminance level of each of the plurality of display areas and control the plurality of drivers to apply local dynamic peaking (S630).

According to FIG. 6B, an AI model 640, if an image 510 is input, may output identification information about whether the relevant image 510 is a target for dynamic peaking application. The processor 140, if the image 510 is identified by the AI model 640 as the target for dynamic peaking application, may identify whether to apply local dynamic peaking application based on whether the pixel value of the image 510 is equal to or less than the threshold value. For example, the processor 140, if the image is identified by the AI model 640 as the target for dynamic peaking application, and the pixel value of the image 510 is equal to or less than the threshold value, may perform local dynamic peaking processing on the image 510.

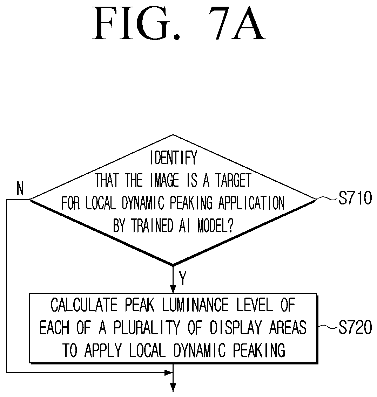

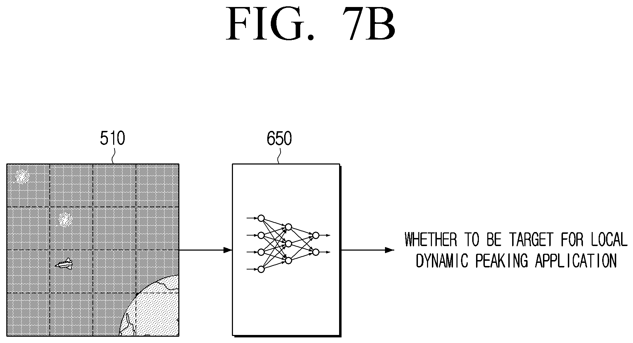

FIGS. 7A and 7B are views illustrating a method of driving a display device according to an embodiment.

According to an embodiment, the trained AI model may be trained to identify whether the input image is a target for local dynamic peaking application based on a training image to which the dynamic peaking is applied and of which a pixel value is equal to or less than a threshold value, a training image to which the dynamic peaking is applied and of which a pixel value exceeds the threshold value, and a training image to which the dynamic peaking is not applied. For example, the AI model may be trained by using each of (a training image to which the dynamic peaking is applied and of which a pixel value is equal to or less than a threshold value, local dynamic application), (a training image to which the dynamic peaking is applied and of which a pixel value exceeds the threshold value, local dynamic non-application), (a training image to which the dynamic peaking is not applied, local dynamic non-application) as an input/output (I/O) training data pair or may be trained by using the relevant data as input data.

According to FIG. 7A, the processor 140 may identify whether the image is a target for local dynamic peaking application by the trained AI model (S710).

The method may include, if the image is identified as the target for local dynamic peaking application (S710:Y), calculating a peak luminance level of each of the plurality of display areas and controlling the plurality of drivers to apply the local dynamic peaking (S720).

According to FIG. 7B, an AI model 650, if an image 510 is input, may output identification information about whether the relevant image is a target for local dynamic peaking application. For example, the processor 140, if the image is identified as the target for local dynamic peaking application by the AI model 650, may perform local dynamic peaking processing on the image 510.

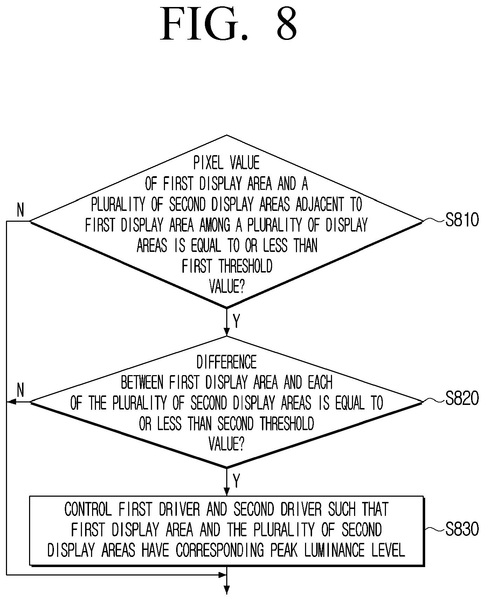

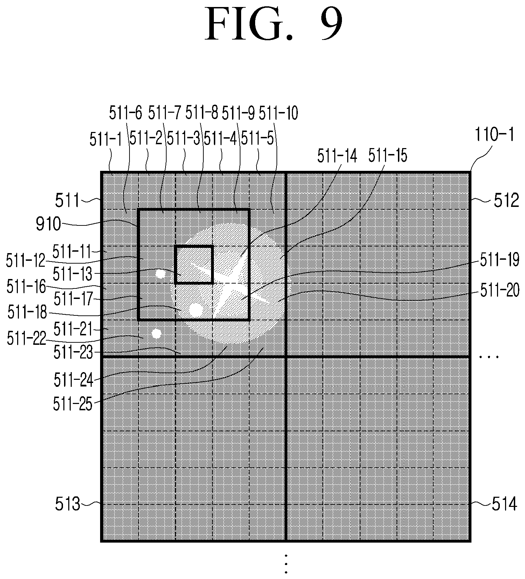

FIGS. 8 and 9 are views illustrating a method of driving a display according to an embodiment.

According to an embodiment shown in FIG. 8, the processor 140 may identify whether a pixel value of a first display area and a plurality of second display areas adjacent to the first display area among the plurality of display areas is equal to or less than a first threshold value (S810). According to an embodiment, a pixel value of each display area may be at least one of an average value, an intermediate value, a maximum value, or a minimum value of each area. Here, the first threshold value may be set as a value capable of maximizing a contrast effect by applying local dynamic peaking and may be a value preset by the manufacturer through experiments.

The processor 140, if the pixel value of the first display area and the plurality of second display areas adjacent to the first display area among the plurality of display areas is equal to or less than the first threshold value (S810:Y), may identify whether a difference between the first display area and each of the plurality of second display areas is equal to or less than a second threshold value (S820). Here, the second threshold value may be set as a value capable of maximizing a contrast effect by applying local dynamic peaking and may be a value preset by the manufacturer through experiments.

The processor 140, if the difference between the first display area and each of the plurality of second display areas is equal to or less than the second threshold value (S820:Y), may control a first driver corresponding to the firs display area and a second driver corresponding to each of the plurality of second display areas such that the first display area and the plurality of second display areas have a corresponding peak luminance level (S830).

According to an embodiment, as shown in FIG. 9, if the pixel value of the first display area 511-13 and the plurality of second display areas 511-6, 511-7, 511-8, 511-12, 511-14, 511-17, 511-18, 511-19 adjacent to the first display area among the plurality of display areas is equal to or less than the first threshold value, and the difference between the first display area 511-13 and each of the plurality of second display areas 511-6, 511-7, 511-8, 511-12, 511-14, 511-17, 511-18, 511-19 is equal to or less than the second threshold value, may control a first driver corresponding to the firs display area and a second driver corresponding to each of the plurality of second display areas such that the first display area and the plurality of second display areas have a corresponding peak luminance level.

According to an embodiment, the processor 140 may obtain a current gain value per subpixel corresponding to the first display area from the memory 130 such that the first display area and the plurality of second display areas have a corresponding peak luminance level. The processor 140 may control the first driver and the plurality of drivers to provide a corresponding current value to each pixel included in the first display area and the plurality of second display areas based on the obtained current gain value.

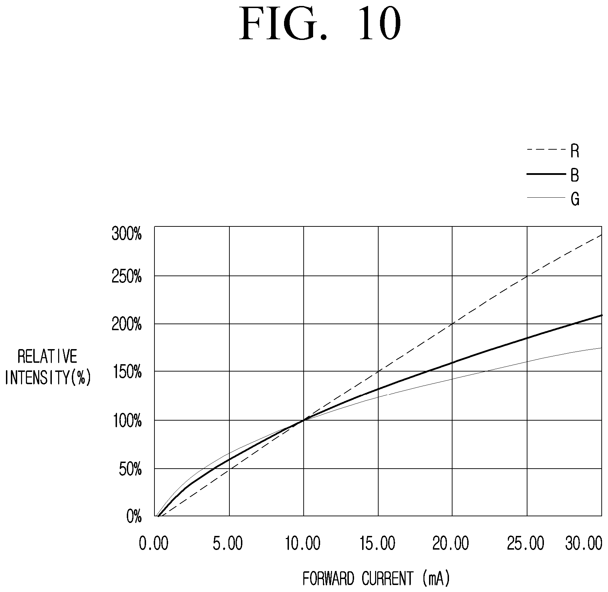

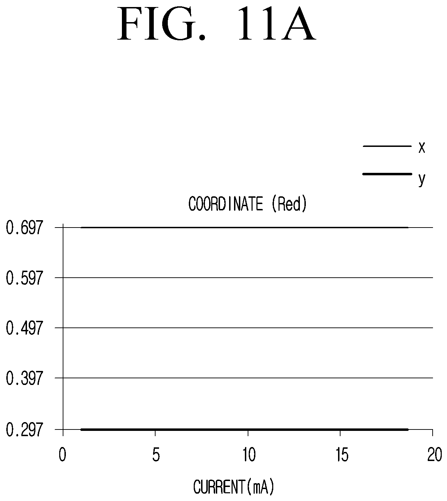

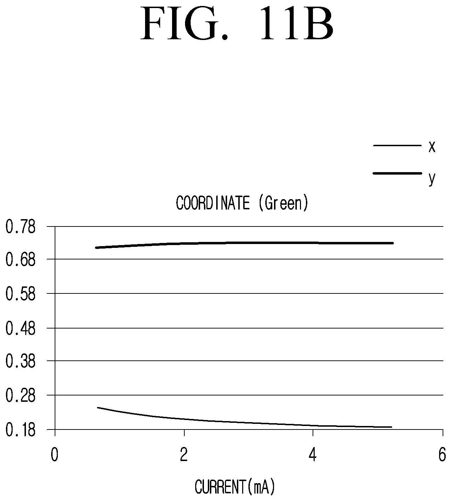

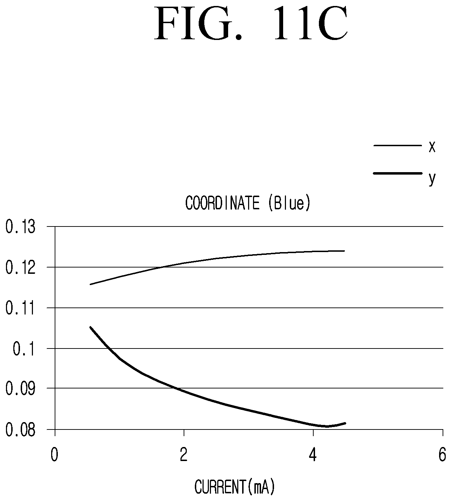

For example, the R/G/B LED elements have a different luminance increase characteristic according to current increase as shown in FIG. 10. As shown in FIGS. 11A to 11B, the R/G/B LED elements have different color shift characteristics because a color coordinate varies in different forms as currents increase. For example, it may be confirmed that in a Red pixel as shown in FIG. 11A, x, y coordinates maintain the same value as currents increase, in a Green pixel as shown in FIG. 11B, x, y coordinates varies little by little, in a Blue pixel as shown in FIG. 11C, x, y coordinates varies significantly as currents increase. In the memory 130, a current gain value per luminance of the R/G/B LED elements calculated by reflecting a luminance characteristic according to currents of the R/G/B LED elements as shown in FIG. 10 and a color characteristic according to currents of the R/G/B LED elements as shown in FIGS. 11A to 11C may be stored. For example, if a peak luminance level corresponding to each display area is identified, a current gain value flowing in each R/G/B LED element may be applied based on a graph of FIG. 3A with respect to a current value for implementing each identified luminance level. A final current value in which a current gain value according to a characteristic of the R/G/B LED element is applied to each current value for implementing each peak luminance level of each display area may be applied to a driver corresponding to each display area. If one driver controls driving of a plurality of display areas, a current gain value corresponding to the plurality of display areas may be provided to one driver.

For example, the driver may control luminance of the plurality of display areas at a peak luminance level by applying each gain value gᵣ₁, g_{g1}, g_{b1} for driving each of R/G/B LED elements of the first display area (FIG. 5, 511-1) to a corresponding current value a, applying each gain value gᵣ₂, g_{g2}, g_{b2} for driving each of R/G/B LED elements of the second display area (FIG. 5, 511-2) to a corresponding current value b, and applying each gain vale gᵣ₁₆, g_{g16}, g_{b16} for driving R/G/B LED elements of the other display areas, for example, a sixteenth display area (FIG. 5, 511-16) to a current value c in the same way.

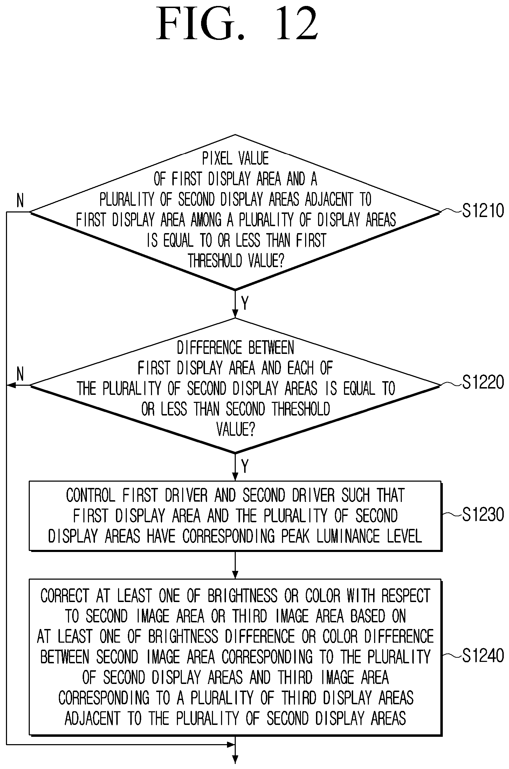

FIG. 12 is a view illustrating a method of driving a display according to an embodiment.

According to an embodiment shown in FIG. 12, the processor 140 may identify whether a pixel value of a first display area and a plurality of second display areas adjacent to the first display area among the plurality of display areas is equal to or less than a first threshold value (S1210).

The processor 140, if the pixel value of the first display area and the plurality of second display areas adjacent to the first display area among the plurality of display areas is equal to or less than the first threshold value (S1210:Y), may identify whether a difference between the first display area and each of the plurality of second display areas is equal to or less than a second threshold value (S1220).

The processor 140, if the difference between the first display area and each of the plurality of second display areas is equal to or less than the second threshold value (S1220:Y), may control a first driver corresponding the firs display area and a second driver corresponding to each of the plurality of second display areas such that the first display area and the plurality of second display areas have a corresponding peak luminance level (S1230).

The processor 140 may correct at least one of brightness or a color with respect to a second image area or a third image area based on at least one of a brightness difference or a color difference between the second image area corresponding to the plurality of second display areas and the third image area corresponding to a plurality of third display areas adjacent to the plurality of second display areas (S1240).

According to an embodiment, the processor 140, if a brightness difference between the second image area corresponding to the plurality of second display areas and the third image area corresponding to a plurality of third display areas adjacent to the plurality of second display areas is equal to or greater than a third threshold value, may adjust the brightness difference by adjusting a brightness value of at least one pixel area among pixel areas positioned at a boundary of the plurality of second display areas adjacent to the pixel area positioned at a boundary (or an edge) of the second image area or may perform image processing such as smoothing processing in the boundary area.

According to an embodiment, the processor 140, if a color difference between the second image area corresponding to the plurality of second display areas and the third image area corresponding to a plurality of third display areas adjacent to the plurality of second display areas is equal to or greater than a fourth threshold value, may adjust the color difference by adjusting a color value of at least one pixel area among pixel areas positioned at a boundary of the plurality of second display areas adjacent to the pixel area positioned at the boundary of the second image area or may perform image processing such as smoothing processing in the boundary area.

According to various embodiments , a contrast effect per part in the image may be maximized by individually calculating a peak gain in a unit of a module or a display area smaller than the cabinet. An image type in which dynamic peaking (or local dynamic peaking) application preference of users is high is identified and applied by using AI, so that user convenience may be enhanced.

The methods according to various examples may be implemented only with a software upgrade or a hardware upgrade with respect to the existing display device.

Various examples may be implemented through an embedded server included in the display device or an external server of the display device.

According to an embodiment, various examples described above may be implemented as software including instructions stored in machine (e.g. a computer) readable storage media. The machine refers to a device which calls instructions stored in storage media and is operable according to the called instructions, wherein it may include the display device (e.g. a display device A) according to the disclosed embodiments. If the instructions are executed by a processor, the processor may perform a function corresponding to the instructions directly or by using other components under control of the processor. The instructions may include a code generated or executed by a compiler or an interpreter. The machine readable storage medium may be provided in a form of a non-transitory storage medium. Here, the term 'non-transitory' merely means that the storage media do not include a signal and are tangible, wherein the term does not distinguish a case that data is stored in the storage media semipermanently from a case that data is stored in the storage media temporarily.

According to an embodiment, the method according to various examples described above may be provided to be included in a computer program product. The computer program product may be traded between a seller and a buyer as goods. The computer program product may be distributed in a form of a machine readable storage medium (e.g. compact disc read only memory (CD-ROM)) or on-line via an application store (e.g. play store"). In the case of on-line distribution, at least part of the computer program product may be stored at least temporarily or may be generated temporarily in a storage medium such as memory of a server of a manufacturer, a server of an application store, or a relay server.

Each of components (e.g. a module or a program) according to the various embodiments above may be configured as a single item or a plurality of items, wherein a partial subcomponent of the aforementioned relevant subcomponents may be omitted, or another subcomponent may be further included in various embodiments. Mostly or additionally, some components (e.g. a module or a program) may be integrated into one item and may identically or similarly perform a function implemented by each of the relevant components before the integration. According to various embodiments, operations performed by a module, a program, or another component may be executed sequentially, in parallel, repetitively, or heuristically, at least part of the operations may be executed in different orders or be omitted, or another operation may be added.

The preferable examples of the present disclosure are shown and described, but it is obvious that the disclosure is not limited to the aforementioned examples, and various modifications may be implemented by those skilled in the art without deviating from the gist claimed in the scope of claims, wherein these modifications should not be independently understood from the technical spirit or prospect.

## Claims

1. A display device comprising:
a display divided into a plurality of display areas;
a driving part including a plurality of driving modules connected to the plurality of display areas;
memory where current information corresponding to each of the plurality of display areas is stored; and
one or more processors connected to the display, the driving part, and the memory to control the display device,
wherein the one or more processors are configured to:
based on an image being inputted to a trained Artificial Intelligence (AI) model, and the image being identified as a target for dynamic peaking application in which the pixel value of the image is equal to or less than a threshold value, identify a peak luminance level of each of the plurality of display areas, and
control the plurality of driving modules such that each of the plurality of display areas have the identified peak luminance level based on the current information of the plurality of display areas stored in the memory.

2. The display device of claim 1, wherein each of the plurality of display areas:
is at least one of a pixel area unit corresponding to one driver IC or a module unit corresponding to a plurality of driver ICs.

3. The display device of claim 1 or 2, wherein the trained AI model:
is trained to identify whether the input image is the target for the dynamic peaking application based on a training image to which the dynamic peaking is applied and a training image to which the dynamic peaking is not applied,
wherein the one or more processors are configured to:
based on the image being identified by the trained AI model as the target for the dynamic peaking application, identify whether a pixel value of the image is equal to or less than the threshold value, and based on the pixel value of the image being equal to or less than the threshold value, control the plurality of driving modules to calculate a peak luminance level of each of the plurality of display areas and apply local dynamic peaking, and
wherein the local dynamic peaking:
controls the plurality of driving modules such that each of the plurality of display areas has an individual peak luminance level.

4. The display device of claim 1 or 2, wherein the trained AI model:
is trained to identify whether the input image is a target for local dynamic peaking application based on a training image to which the dynamic peaking is applied and of which a pixel value is equal to or less than the threshold value and a training image to which the dynamic peaking is not applied,
wherein the one or more processors are configured to:
based on the image being identified by the trained AI model as the target for the local dynamic peaking application, control the plurality of driving modules to calculate a peak luminance level of each of the plurality of display areas and apply the local dynamic peaking, and
wherein the local dynamic peaking:
controls the plurality of driving modules such that each of the plurality of display areas has an individual peak luminance level.

5. The display device of claim 1 or 2, wherein the one or more processors are configured to:
based on a pixel value of a first display area among the plurality of display areas and a plurality of second display areas adjacent to the first display area being equal to or less than a first threshold value, and a difference between the first display area and each of the plurality of second display areas being equal to or less than a second threshold value, control a first driving module corresponding to the first display area and second driving modules corresponding to each of the plurality of second display areas such that the first display area and the plurality of second display areas have a corresponding peak luminance level.

6. The display device of claim 5, wherein the one or more processors are configured to:
correct at least one of brightness or a color with respect to a second image area or a third image area based on at least one of a brightness difference or a color difference between the second image area corresponding to the plurality of second display areas and the third image area corresponding to a plurality of third display areas adjacent to the plurality of second display areas.

7. The display device of claim 5, wherein the one or more processors are configured to:
obtain a current gain value per subpixel corresponding to the first display area from the memory such that the first display area and the plurality of second display areas have a corresponding peak luminance level, and control the first driving module and the plurality of second driving modules based on the obtained current gain value.

8. The display device of claim 1 or 2, wherein the memory is configured to:
further store power information of each subpixel per gradation of the image,
wherein the one or more processors are configured to:
identify an amount of individual consumption power of each of the plurality of display areas based on a gradation value of an image displayed on the plurality of display areas and power information of each subpixel per gradation, and
identify a peak luminance level of each of the plurality of display areas based on the amount of individual consumption power of each of the plurality of display areas.

9. The display device of claim 1 or 2, wherein the current information:
includes current control information according to luminance per subpixel corresponding to each of the plurality of display areas, and
wherein the subpixel:
includes Red (R) LED, Green (G) LED, and Blue (B) LED subpixels.

10. A method of driving a display device divided into a plurality of display areas, comprising:
inputting an image into a trained AI model and based on the image being identified as a target for dynamic peaking application in which the pixel value of the image is equal to or less than a threshold value, identifying a peak luminance level of each of the plurality of display areas; and
controlling a plurality of driving modules corresponding to the plurality of display areas such that each of the plurality of display areas has the identified peak luminance level based on current information of the plurality of display areas.

11. The method of claim 10, wherein each of the plurality of display areas:
is at least one of a pixel area unit corresponding to one driver IC or a module unit corresponding to a plurality of driver ICs.

12. The method of claim 10, wherein the trained AI model is trained to identify whether an input image is the target for the dynamic peaking application based on a first training image to which the dynamic peaking is applied and a second training image to which the dynamic peaking is not applied,
wherein the controlling the plurality of drivers comprises:
based on the image being identified by the trained AI model as the target for the dynamic peaking application, identifying whether a first pixel value of the image is equal to or less than the threshold value, and based on the first pixel value of the image being equal to or less than the threshold value, controlling the plurality of drivers to detemine a first plurality of peak luminance levels of the plurality of display areas and apply local dynamic peaking to the plurality of display areas, and
wherein the local dynamic peaking controls the plurality of drivers such that the plurality of display areas have a plurality of individual peak luminance levels.

13. The method of claim 10 or 11, wherein the trained AI model:
is trained to identify whether the input image is a target for local dynamic peaking application based on a training image to which the dynamic peaking is applied and of which a pixel value is equal to or less than the threshold value and a training image to which the dynamic peaking is not applied,
wherein the controlling the plurality of driving modules includes:
based on the image being identified by the trained AI model as the target of the local dynamic peaking application, controlling the plurality of driving modules to calculate a peak luminance level of each of the plurality of display areas and apply the local dynamic peaking,
wherein the local dynamic peaking:
controls the plurality of driving modules such that each of the plurality of display areas has an individual peak luminance level.

14. The method of claim 10 or 11, wherein the controlling the plurality of driving modules includes:
based on a pixel value of a first display area among the plurality of display areas and a plurality of second display areas adjacent to the first display area being equal to or less than a first threshold value, and a difference between the first display area and each of the plurality of second display areas being equal to or less than a second threshold value, controlling a first driving module corresponding to the first display area and second driving modules corresponding to each of the plurality of second display areas such that the first display area and the plurality of second display areas have a corresponding peak luminance level.

15. A non-transitory computer readable medium storing computer instructions that, when executed by a processor of a display device divided into a plurality of display areas, causes the display device to:
input an image into a trained AI model and based on the image being identified as a target for dynamic peaking application in which the pixel value of the image is equal to or less than a threshold value, identify a peak luminance level of each of the plurality of display areas, and
control a plurality of driving modules corresponding to the plurality of display areas such that each of the plurality of display areas has the identified peak luminance level based on current information of the plurality of display areas.
